# EUROPÄISCHE PATENTANMELDUNG

(11) **EP 2 431 682 A2**
(43) Veröffentlichungstag der Anmeldung: **21.03.2012**
(21) Anmeldenummer: 11179879.9
(22) Anmeldetag: 02.09.2011
(51) Int. Cl.: F24H 9/12, F24D 13/04

(54) **Heizkörper mit Lüfterbaugruppe und Elektroheizstab**

(30) Priorität: 17.09.2010 DE 202010012695 U
(71) Anmelder: KERMI GmbH, 94447 Plattling (DE)
(72) Erfinder: Robl, Karl, 93479 Grafenwiesen (DE)
(74) Vertreter: Patentanwälte Bressel und Partner

(57) **Zusammenfassung**

Die Erfindung betrifft einen Heizkörper, insbesondere Rohrheizkörper, mit senkrechten Sammelrohren (2, 3), welche durch mit den Sammelrohren verbundene horizontale Heizrohre (4n) voneinander beabstandet sind, wobei im Bereich der unteren Heizrohre (4n) eine mittige Anschlussverschraubung (5) für den Vor- und Rücklauf eines Heizmediums, ein Thermostatventil (6) sowie eine Lüfterbaugruppe (7) vorgesehen sind und im Bereich des unteren Endes eines Sammelrohres ein Elektroheizstab (8) angeordnet ist, wobei die Sammelrohrenden unterhalb der mittigen Anschlussverschraubung (5) im Einsatz- bzw. Einschraubbereich des Elektroheizstabes (8) durch eine Bypassleitung (9) miteinander verbunden sind.

## Beschreibung

Die Erfindung geht von einem Heizkörper mit senkrechten Sammelrohren aus, welche durch mit den Sammelrohren verbundene horizontale Heizrohre voneinander beabstandet sind, wobei im Bereich der unteren Heizrohre eine mittige Anschlussverschraubung für den Vor- und Rücklauf eines Heizmediums sowie ein Thermostatventil vorgesehen sind. Derartige Heizkörper sind hinlänglich bekannt. Bekannt sind auch Heizkörper, die um eine Heizlüfterbaugruppe sowie einen Elektroheizstab erweitert sind, jedoch keinen Vor- und Rücklaufanschluss für das Heizmedium eines Heizungskreislaufes aufweisen. Dazu wird an die unteren Sammelrohrenden eine Heizlüfterbaugruppe adaptiert, wobei in mindestens einem der Sammelrohre zusätzlich ein Elektroheizstab angeordnet ist.

Zur Realisierung des Heizmediumanschlusses an eine bevorzugte mittige Anschlussverschraubung werden die Sammelrohre um den für eine handelsübliche Verschraubung benötigten Bauraum verlängert. Da handelsübliche Elektroheizstäbe einen möglichst großen beheizten Bereich aufweisen, entstehen in dem verlängerten Sammelrohrende auf der mit dem Elektroheizstab versehenen Seite mangels ausreichender Zirkulation des Heizmediums unerwünscht hohe Oberflächentemperaturen.

Die Aufgabe der Erfindung besteht darin, den um Lüfterbaugruppe und Elektroheizstab erweiterten Heizkörper mit einem Heizmediumanschluss eines Heizungskreislaufes zu versehen sowie die für die Zirkulation und Wärmeverteilung des Heizmediums bestehenden Nachteil bei einem Elektrobetrieb des Heizkörpers zu vermeiden.

Erfindungsgemäß wird diese Aufgabe durch die Merkmale des Anspruchs 1 gelöst. Demnach beinhaltet die Erfindung einen Heizkörper, insbesondere einen Rohrheizkörper, mit senkrechten Sammelrohren, welche durch mit den Sammelrohren verbundene horizontale Heizrohre voneinander beabstandet sind, wobei im Bereich der unteren Heizrohre eine mittige Anschlussverschraubung für den Vor- und Rücklauf eines Heizmediums, ein Thermostatventil sowie eine Lüfterbaugruppe vorgesehen sind. Im Bereich des unteren Endes eines Sammelrohres ist ein Elektroheizstab angeordnet. Erfindungsgemäß ist vorgesehen, dass die Sammelrohrenden unterhalb der mittigen Anschlussverschraubung für den Vor- und Rücklauf des Heizmediums durch eine Bypassleitung miteinander verbunden sind. Bevorzugt sind die Sammelrohrenden im Einsatz- bzw. Einschraubbereich des Elektroheizstabes durch eine Bypassleitung miteinander verbunden. Durch die Bypassleitung wird eine optimale Zirkulation des Heizmediums beim Betrieb des Heizkörpers mit Elektroheizstab sichergestellt. Im reinen Warmwasserbetrieb bleibt die Bypassleitung kalt und beeinflusst den Thermostaten an der Anschlussverschraubung nicht.

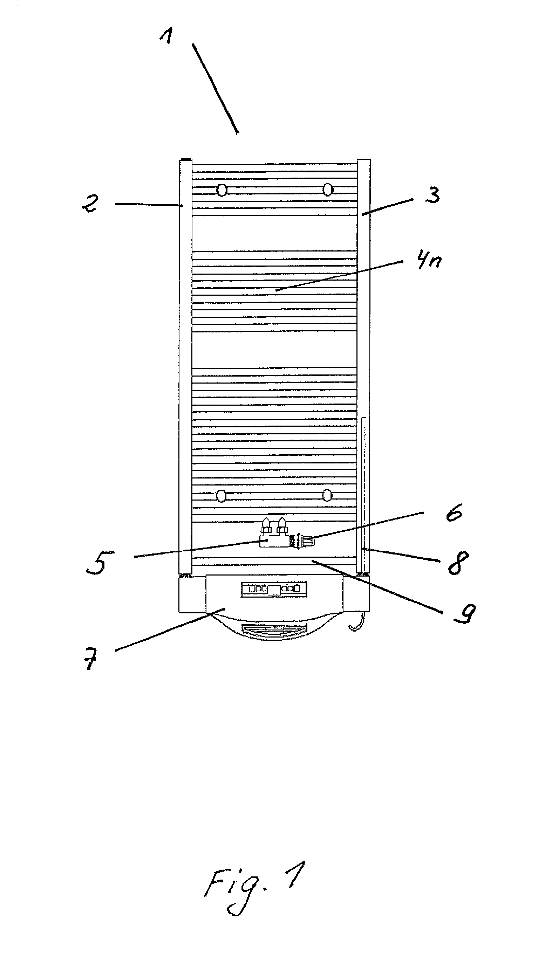

Nachfolgend wird die Erfindung an Hand eines in der Zeichnung dargestellten Ausführungsbeispiels näher beschrieben.
Es zeigen
Fig. 1 einen Rohrheizkörper.

In der Fig. 1 ist ein Rohrheizkörper 1 mit senkrechten Sammelrohren 2, 3, welche durch mit den Sammelrohren 2, 3 verbundene horizontale Heizrohre 4n voneinander beabstandet sind, dargestellt. Im Bereich der unteren Heizrohre 4n sind eine mittige Anschlussverschraubung 5 für den Vor- und Rücklauf eines Heizmediums, ein Thermostatventil 6 sowie eine Lüfterbaugruppe 7 vorgesehen. Im Bereich des unteren Endes des Sammelrohres 3 ist ein Elektroheizstab 8 eingesetzt. Die Sammelrohrenden sind unterhalb der mittigen Anschlussverschraubung 5 im Einsatz- bzw. Einschraubbereich des Elektroheizstabes 8 durch eine Bypassleitung 9 miteinander verbunden.
Vorteilhaft wird durch die Bypassleitung eine optimale Zirkulation des Heizmediums beim Betrieb des Heizkörpers mit Elektroheizstab erreicht.

## Patentansprüche

1. Heizkörper, insbesondere Rohrheizkörper, mit senkrechten Sammelrohren (2, 3), welche durch mit den Sammelrohren verbundene horizontale Heizrohre (4n) voneinander beabstandet sind, wobei im Bereich der unteren Heizrohre (4n) eine mittige Anschlussverschraubung (5) für den Vor- und Rücklauf eines Heizmediums, ein Thermostatventil (6) sowie eine Lüfterbaugruppe (7) vorgesehen sind und im Bereich des unteren Endes eines Sammelrohres ein Elektroheizstab (8) angeordnet ist, **dadurch gekennzeichnet, dass** die Sammelrohrenden unterhalb der mittigen Anschlussverschraubung (5) im Einsatz- bzw. Einschraubbereich des Elektroheizstabes (8) durch eine Bypassleitung (9) miteinander verbunden sind.
